# EUROPÄISCHE PATENTSCHRIFT

(11) **EP 0 572 891 B1**
(45) Veröffentlichungstag und Bekanntmachung des Hinweises auf die Patenterteilung: **09.04.1997**
(21) Anmeldenummer: 93108354.7
(22) Anmeldetag: 24.05.1993
(51) Int. Cl.: D04H 13/00, D04H 5/02

(54) **Schichtstoff aus Vlies und Gelege**
Non-woven sheet and saim
Couche non-tissée et grille

(30) Priorität: 30.05.1992 DE 9207367 U
(43) Veröffentlichungstag der Anmeldung: 08.12.1993
(73) Patentinhaber: HOECHST AKTIENGESELLSCHAFT, 65926 Frankfurt am Main (DE)
(72) Erfinder: Schöps, Michael, W-8934 Grossaitingen (DE); Kaulich, Franz, W-8903 Bobingen (DE); Weiter, Bertrand Claude, W-8903 Bobingen (DE)

(56) Entgegenhaltungen:
- EP-A- 347 795
- EP-A- 0 176 847
- EP-A- 0 242 524
- EP-A- 0 315 553
- EP-A- 0 413 295
- EP-A- 0 432 620
- GB-A- 2 226 054

## Beschreibung

Die vorliegende Erfindung betrifft einen dimensionsstabilen Schichtstoff aus mindestens zwei Vliesschichten und mindestens einer Gelegeschicht, der insbesondere als Einlage für Bitumenbahnen dient.

Aus der GB-PS-1 517 595 ist ein ähnliches Material bekannt, bei dem ein Gelege aus Glasfasern in einen Vliesstoff aus organischen Fasern eingearbeitet und anschließend das so erhaltene Gebilde durch Auftrag eines Acrylatbinders verfestigt wird.
Auch aus dem EP-B-110 039 ist ein Schichtstoff mit mindestens 3 Schichten bekannt, der aus Vlies- und Gelegeschichten aufgebaut ist. In einer Ausführungsform enthält dieser bekannte Schichtstoff zwei Vliesschichten aus organischen Fasern, zwischen denen ein Gelege aus Mineralfasern, z.B. Glasfasern, eingeschlossen ist. Bei diesem bekannten Material erfolgt die Bindung zwischen den Vliesschichten und dem Gelege durch einen Schmelzkleber.
Aus dem deutschen Gebrauchsmuster G-74 24 706 ist ein Filterstoff bekannt, der aus einem Vlies besteht auf das ein Gewebe oder Gelege so aufgenadelt wird, daß auf der dem Vliesstoff abgewandten Seite des Gewebes oder Geleges ein Faserflor entsteht.

Die aus den genannten Druckschriften GB-PS-1 517 595 und EP-B-110 039 bekannten Materialien werden zur Herstellung von Bitumen-Dachbahnen empfohlen.
Allerdings zeigen sie bei diesem Einsatz den gravierenden Mangel, daß sie bei thermischer Belastung zur Bildung von Welligkeit und Rissen neigen.
Dieser Mangel kann bereits bei der Imprägnierung der bekannten Schichtstoffe mit heißem Bitumen zu Produktionsschwierigkeiten führen, er kann aber auch beim Heiß-Verlegen der Bitumenbahnen auf dem Dach oder später bei wechselnder Sonneneinstrahlung zu Undichtigkeiten der hergestellten Dachhaut führen.

Diese Schwierigkeiten werden in der DE-A-39 41 189 angesprochen und es wird dort ausgeführt, daß diese Mängel der bekannten Materialien auf den sehr unterschiedlichen Reaktionen (z.B. Dehnbarkeit, Moduländerungen, Schrumpfung) der im Vlies und in der Verstärkung eingesetzten Fasermaterialien (Polyesterfasern im Vlies und Glasfasern in der Verstärkung) bei mechanischer und/oder thermischer Belastung zurückzuführen sind. Es wird daher in dieser Druckschrift vorgeschlagen, zur Beseitigung der genannten Mängel der bekannten Materialien, Vliesstoffe zur Verstärkung nicht mit textilen Flächengebilden, wie Glasvliesen oder Glasgeweben, sondern mit einzelnen Verstärkungsfäden zu versehen, die im Abstand voneinander parallel in den Vliesstoff inkorporiert sind. Die Bindung dieser Gebilde erfolgt durch chemische Bindemittel, durch Nadeln und/oder durch Thermobindung.

Die nach dieser Vorschrift erhaltenen Materialien zeigen in der Tat eine verbesserte Thermostabilität. Sie haben aber nicht die für Einlagen für Bitumenbahnen geforderte besonders wichtige, hohe mechanische Stabilität und
die Herstellung von derartigen, mit einzelnen Filamenten verstärkten Vliesstoffen erweist sich als sehr aufwendig und störanfällig.
Aufgabe der vorliegenden Erfindung ist es, Schichtstoffe zur Verfügung zu stellen, die bei thermomechanischer Belastung dimensionsstabil bleiben und mit geringem Aufwand herstellbar sind.

Ein Gegenstand der vorliegenden Erfindung ist ein Schichtstoff, dessen Oberflächen aus Spinnvliesen gebildet werden und der aus mindestens zwei Schichten von Spinnvliesen, bevorzugt aus zwei Schichten von Spinnvliesen, und mindestens einer Gelegeschicht, bevorzugt einer Gelegeschicht aus Verstärkungsgarnen besteht, wobei die Gelegeschichten bzw. die Gelegeschicht jeweils zwischen zwei Spinnvlies-Schichten liegen und das bzw. die Gelege eine Fadendichte von 0,5 bis 3 Fäden/cm, vorzugsweise 0,5 bis 2 Fäden/cm, aufweist und daß Spinnvliese und Gelege durch eine Nadelung von etwa 20 - 70 Stichen/cm², vorzugsweise von 40 - 60 Stichen/cm² miteinander verbunden sind.

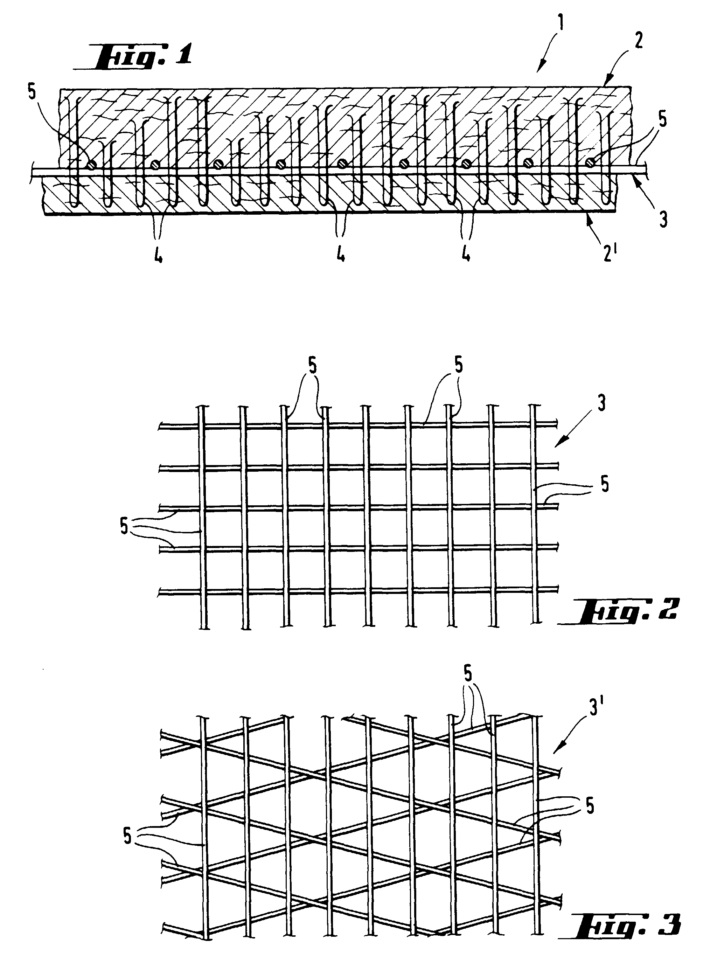

Der erfindungsgemäße Schichtstoff besteht somit aus einer Anzahl N von Spinnvlies-Schichten und aus einer Anzahl G=N-1 von Gelegeschichten. In der Regel ist N eine Zahl von 2 bis 4, kann aber bei bestimmten Anforderungen auch darüber liegen. Bevorzugt ist N=2, das bedeutet, daß bevorzugte erfindungsgemäße Schichtstoffe aus zwei Lagen Spinnvlies und einer dazwischen liegenden Gelegeschicht bestehen. Die Figur 1 zeigt schematisch einen Schnitt durch einen solchen bevorzugten Schichtstoff (1) mit den beiden Vliesschichten (2,2'), der dazwischen liegenden Gelegeschicht (3), den Filamenten (4), die sich von der äußeren Vliesschicht durch den Schicht-Aufbau hindurch erstrecken und eine feste Verbindung der Schichten bewirken und mit den Verstärkungsfäden (5), aus denen die Gelegeschicht (3) besteht.

Das Flächengewicht der erfindungsgemäßen Schichtstoffe beträgt 60 bis 400 g/m², vorzugsweise 80 bis 250 g/m².
Davon entfallen auf das Gelege 3 bis 20, vorzugsweise 4,5 bis 10 g/m².
Die Spinnvliese sind vorzugsweise sogenannte Spunbonds, die durch eine Wirrablage frisch schmelzgesponnener Filamente erzeugt werden.

Sie bestehen aus Endlos-Synthesefasern aus schmelzspinnbaren Polymermaterialien. Geeignete Polymermaterialien sind beispielsweise Polyamide, wie z.B. Polyhexamethylen-diadipamid, Poly-caprolactam, aromatische oder teilaromatische Polyamide ("Aramide"), teilaromatische oder vollaromatische Polyester, Polyphenylensulfid (PPS), Polymere mit Ether- und Keto-gruppen, wie z.B. Polyetherketone (PEK) und Poly-etheretherketon (PEEK), oder Polybenzimidazole.

Bevorzugt bestehen die Spinnvliese aus schmelzspinnbaren Polyestern.
Als Polyestermaterial kommen im Prinzip alle zur Faserherstellung geeigneten bekannten Typen in Betracht. Derartige Polyester bestehen überwiegend aus Bausteinen, die sich von aromatischen Dicarbonsäuren und von aliphatischen Diolen ableiten. Gängige aromatische Dicarbonsäurebausteine sind die zweiwertigen Reste von Benzoldicarbonsäuren, insbesondere der Terephthalsäure und der Isophthalsäure; gängige Diole haben 2-4 C-Atome, wobei das Ethylenglycol besonders geeignet ist. Besonders vorteilhaft sind erfindungsgemäße Schichtstoffbahnen, deren Vliese aus einem Polyestermaterial bestehen, das zu mindestens 85 mol% aus Polyethylenterephthalat besteht. Die restlichen 15 mol% bauen sich dann aus Dicarbonsäureeinheiten und Glycoleinheiten auf, die als sogenannte Modifizierungsmittel wirken und die es dem Fachmann gestatten, die physikalischen und chemischen Eigenschaften der hergestellten Filamente gezielt zu beeinflussen. Beispiele für solche Dicarbonsäureeinheiten sind Reste der Isophthalsäure oder von aliphatischen Dicarbonsäure wie z.B. Glutarsäure, Adipinsäure, Sebazinsäure; Beispiele für modifizierend wirkende Diolreste sind solche von längerkettigen Diolen, z.B. von Propandiol oder Butandiol, von Di- oder Triethylenglycol oder, sofern in geringer Menge vorhanden, von Polyglycol mit einem Molgewicht von ca. 500 - 2000.

Besonders bevorzugt sind Polyester, die mindesten 95 mol% Polyethylenterephthalat enthalten, insbesondere solche aus unmodifiziertem PET.

Sollen die erfindungsgemäßen Schichtstoffe zusätzlich eine flammhemmende Wirkung haben, so enthalten sie mit besonderem Vorteil Spinnvliese, die aus flammhemmend modifizierten Polyestern ersponnen wurden. Derartige flammhemmend modifizierten Polyester sind bekannt. Sie enthalten Zusätze von Halogenverbindungen, insbesondere Bromverbindungen, oder, was besonders vorteilhaft ist, sie enthalten Phosphorverbindungen, die in die Polyesterkette einkondensiert sind.
Besonders bevorzugte, flammhemmende erfindungsgemäße Schichtstoffe enthalten Spinnvliese aus Polyestern, die in der Kette Baugruppen der Formel 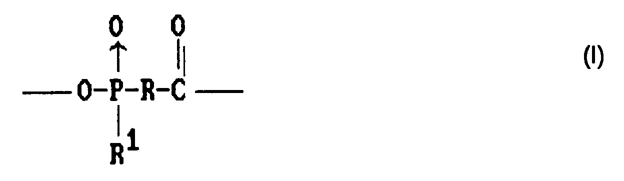 worin R Alkylen oder Polymethylen mit 2 bis 6 C-Atomen oder Phenyl und R¹ Alkyl mit 1 bis 6 C-Atomen, Aryl oder Aralkyl bedeutet, einkondensiert enthalten.
Vorzugsweise bedeuten in der Formel I R Ethylen und R¹ Methyl, Ethyl, Phenyl, oder o-, m- oder p-Methyl-phenyl, insbesondere Methyl.
Derartige Spinnvliese werden z.B. in der DE-A-39 40 713 beschrieben.

Die in den erfindungsgemäßen Vliesen enthaltenen Polyester haben ein Molekulargewicht entsprechend einer intrinsischen Viskosität (IV), gemessen in einer Lösung von 1g Polymer in 100 ml Dichloressigsäure bei 25°C, von 0,7 bis 1,4.

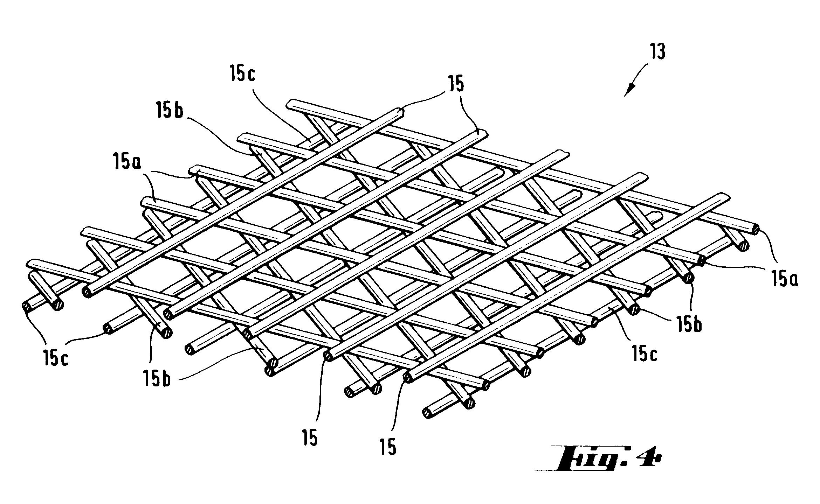

Gelege im Sinne dieser Erfindung sind Fadengitter, die aus im Winkel zueinander liegenden Scharen paralleler Verstärkungsfäden gebildet werden, wobei die Fäden an ihren Kreuzungspunkten aneinander fixiert sind.
Der Winkel, unter dem die Fadenscharen sich kreuzen, liegt in der Regel zwischen 10° und 90°. Ein Gelege kann selbstverständlich mehr als nur zwei Fadenscharen enthalten. Die Anzahl und Richtung der Fadenscharen richtet sich nach eventuellen besonderen Anforderungen.
Bevorzugt sind Schichtstoffe mit Gelegen, die aus einem aus zwei im Winkel von vorzugsweise 90° sich kreuzenden Fadenscharen bestehen. Ist eine besonders hohe mechanische Stabilität in einer Richtung, z.B. der Längsrichtung des Schichtstoffs erforderlich, so empfielt sich der Einbau eines Geleges, das in der Längsrichtung eine Fadenschar mit geringerem Fadenabstand aufweist, die z.B. durch eine querverlaufende Fadenschar oder durch zwei Fadenscharen, die mit der ersten Winkel von ca. +40° bis +70° bzw. -40° bis -70° bilden, stabilisiert wird. Die Figuren 2 und 3 zeigen beispielsweise schematisch die Anordnung der Verstärkungsfäden (5) in derartigen Gelegen (3) und (3').
Besondere Stabilitätsanforderungen in allen Richtungen können durch ein Gelege mit 4 oder 5 Fadenscharen, die in verschiedenen Richtungen übereinander liegen und an den Fadenkreuzungspunkten miteinander verbunden sind, erfüllt werden.
Ein Beispiel für ein solches spezielles Gelege (13), das drei in verschiedenen Richtungen laufende Fadenscharen (15;15a;15b) und zusätzlich eine mit einer dieser Fadenscharen parallel, aber in einer vierten Ebene laufende Fadenschar (15c) aufweist, ist in schräger Aufsicht in der Figur 4 dargestellt.

Die oben angegeben Fadendichte von 0,5 bis 3 Fäden/cm wird gemessen senkrecht zu der jeweiligen Fadenlaufrichtung. Wie bereits ausgeführt, kann die Fadendichte bei allen vorhandenen Fadenscharen gleich sein oder es können je nach der zu erwartenden Beanspruchung unterschiedliche Fadendichten im Rahmen dieser Grenzwerte gewählt werden.
Besonders bevorzugt sind erfindungsgemäße Schichtstoffe mit einem Gelege, das eine Fadendichte von 0,5 bis 1 Faden/cm aufweist.

Die Fixierung der sich kreuzenden Verstärkungsfäden an den Kreuzungspunkten kann bei Fäden, die unzersetzt erweichen, durch autogenes Verschmelzen bei erhöhter Temperatur und gegebenenfalls unter Anwendung von Druck erfolgen. Die Fixierung kann aber auf jeden Fall durch handelsübliche chemische Bindemittel, wie z.B. Polyvinylalkohol oder Butadien-Styrol-Copolymerisate oder auch durch Schmelzkleber erfolgen. Für flammhemmende, erfindungsgemäße Schichtstoffe wird die Fixierung durch ein flammhemmendes Bindemittel, z.B. durch einen Phosphorsäure- oder Phosphonsäuregruppen enthaltende Polyester, der als Schmelzkleber eingesetzt wird bewerkstelligt.

Auch handelsübliche Gelege, die der obigen Beschreibung entsprechen, können selbstverständlich eingesetzt werden.

Die Verstärkungsgarne der Gelege können im Prinzip Stapelfasergarne oder Filamentgarne (= Endlosfasergarne) sein, vorausgesetzt, daß sie die gewünschte Kombination von Höchstzugkraft und Höchstzugkraftdehnung haben.
Bevorzugt sind aufgrund ihrer vorteilhaften mechanischen Eigenschaften Filamentgarne.
Bevorzugt sind die Filamentgarne aus Glas.

Bewährt als Verstärkungsgarn haben sich aber auch Garne aus vollorientierten Polyesterfilamenten (fully oriented yarns, "FOY"-Garne) wie sie in Chemiefasern/Textilindustrie 37/89, 1987, Seite 794 ff. beschrieben werden, Garne aus vollaromatischen Polyamiden, insbesondere solchen, die ausschließlich aus paraständigen Diaminen und Dicarbonsäuren (z.B. p-Phenylendiamin und Terephthalsäure) aufgebaut sind. Gut geeignet sind aber auch Verstärkungsgarne aus aromatischen Polyamiden, die durch Einbau metaständiger Funktionsgruppen enthaltender Bausteine (z.B. Isophthalsäure) modifiziert sind, oder aus vollaromatischen Polyamiden, die statistisch aus verschiedenen Diamin- und/oder Dicarbonsäure-Bausteinen aufgebaut sind.
Auch Verstärkungsgarne aus anderen Hochmodulfasern wie z.B. Kohlenstoffasern oder Fasern aus Poly-phenylensulfid, PEEK (Poly-etherether-keton), PEK (Poly-etherketon) oder Poly-benzimidazol können in den Gelegen der erfindungsgemäßen Schichtstoffe enthalten sein.

Für die weitaus meisten Einsatzzwecke sind erfindungsgemäße Schichtstoffe bestens geeignet, die ein Gelege aus Glasfasern enthalten.

Die Filamente der Verstärkungsgarne können auch unrunde Querschnitte, wie z.B. multilobale, hantelförmige oder bändchenförmige Querschnitte, aufweisen.

Die Verstärkungsgarne der Gelege der erfindungsgemäßen Schichtstoffe haben eine Höchstzugkraftdehnung von etwa 2,5 - 25 %.
Innerhalb dieser relativ weiten Grenzen kann die gewünschte Dehnung durch die Auswahl des Garnmaterials eingestellt werden. So kann eine sehr geringe Dehnung von etwa 2,5 bis 3,5 % durch Wahl von Glassfasern oder Aramidfasern, eine mittlere bis hohe Dehnung von 14 bis 25% durch die Wahl von mehr oder weniger orientierten Polyesterfasern (diese decken einen Dehnbarkeitsbereich von ca 14 bis 24 % ab) oder von modifizierten Aramidfasern (z.B. (R)NOMEX) erhalten werden.
Die feinheitsbezogene Festigkeit beträgt ca. 40 bis 180 cN/tex, vorzugsweise 40 bis 70 cN/tex. Hier decken Glas- bzw. Polyesterfasern den Festigkeitsbereich von etwa 40 bis 50 bzw. 40 bis 70 cN/tex ab.

Der Titer der Verstärkungsgarne der Gelege beträgt zweckmäßigerweise 70 bis 1200 dtex für organische Fasermaterialien und ca. 30 bis 130 tex für anorganische. In speziellen Fällen, wo eine geringere oder eine besonders hohe mechanische Festigkeit erwünscht sind, kann natürlich auch ein geringerer oder höherer Titer der Verstärkungsgarne angezeigt sein.

In bevorzugten Gelege aus Glasfaser-Verstärkungsgarnen haben die Garne Titer von ca. 30 bis 130 tex

Vorzugsweise beträgt der Heißluftschrumpf der Verstärkungsgarne aus Polyestern bei 160°C vorzugsweise 0.5 bis 6% gemessen gemäß der Prüfnorm DIN 53 866.

Bevorzugt sind erfindungsgemäße Schichtstoffe, deren Spinnvliese aus Polyesterfasern, insbesondere aus Polyethylen-terephthalat und deren Verstärkungsgelege aus Glas oder anderen thermisch stabilen Rohstoffen bestehen. Insbesondere ist ein solcher Schichtstoff bevorzugt, wenn er zwei Vliesschichten und eine dazwischen liegende Gelegeschicht aufweist.

Besonders bevorzugt ist auch ein erfindungsgemäßer Schichtstoff, der aus zwei Vliesschichten und einer dazwischen liegenden Gelegeschicht aufgebaut ist, wobei beide Vliesschichten etwa das gleiche Flächengewicht haben.

Für spezielle Anforderungen besonders bevorzugt ist ein erfindungsgemäßer Schichtstoff, der aus zwei Vliesschichten und einer dazwischen liegenden Gelegeschicht aufgebaut ist, wobei die Vliesschichte ein unterschiedliches Flächengewicht haben, z.B. eine der Vliesschichten mindestens 20% stärker ist als die andere.

Die erfindungsgemäßen Schichtstoffe können zusätzlich zum Vernadeln, noch durch einen chemischen Binder verfestigt sein.
Als zusätzliche Binder können die erfindungsgemäßen Schichtstoffe z.B. die üblichen Polymeren, die in Form von Dispersionen appliziert werden, enthalten. Zweckmäßigerweise sind dies Dispersionen von Polyvinylalkohol (PVA) oder Butadien-Styrol-Copolymerisaten.
Flammfeste Binder, wie sie z.B. in der DE-A-39 01 152 beschrieben werden, sind bevorzugt.
In erfindungsgemäßen Vliesstoffe, die zusätzlich zum Vernadeln verfestigt sind, ist der Binder jedoch vorzugsweise ein Schmelzbinder. Als Schmelzbinder kommen insbesondere modifizierte Polyester mit einem gegnüber dem Vliestoff-Rohstoff um 10 - 50°C, vorzugsweise um 30 - 50°C abgesenkten Schmelzpunkt in Betracht. Beispiele für ein derartiges Bindemittel sind Polypropylen, Polybutylen-terephthalat oder durch Einkondensieren längerkettiger Diole und/oder von Isophthalsäure oder aliphatischen Dicarbonsäuren modifiziertes Polyethylen-terephthalat.

Die Schmelzbinder werden vorzugsweise in Faserform in die Vliese eingebracht und sind dann vorzugsweise in den Vliesstoffschichten angereichert, die der Gelegeschicht zugewandt sind.

Sofern erfindungsgemäße Schichtstoffe mit flammhemmenden Eigenschaften zusätzlich gebunden sind, enthalten sie vorzugsweise flammhemmende Binder.
Als flammhemmender Schmelzbinder kann z.B ein durch Einbau von Kettengliedern der oben angegebenen Formel I modifiziertes Polyethylenterephthalat in dem erfindungsgemäßen Schichtstoff vorhanden sein.

Besonders bevorzugt sind auch solche erfindungsgemäßen filamentverstärkten Vliesstoffbahnen, die eine Kombination von bevorzugten Merkmalen aufweisen.

Die Herstellung der erfindungsgemäßen Schichtstoffe erfolgt durch Ablage des die Vliesschichten bildenden Fasermaterials auf einer bewegten Ablagefläche. Für die Ablage der Endlosfasern werden zweckmäßigerweise Spinnbalken eingesetzt, aus denen ein Faservorhang in einen Spinn-und Streckschacht eingesponnen wird, in dem die Fasern durch einen Fluidstrom gleichzeitig abgekühlt und beschleunigt und damit verstreckt werden.

Das Einbringen der Verstärkungsgelege erfolgt zweckmäßigerweise von einem Lieferorgan, von dem aus die Garne zwischen zwei Vlies-Schichten einlaufen, die von zwei in Transportrichtung hintereinander liegenden Reihen von Ablageorganen auf derselben Ablage abgelegt werden.
Selbstverständlich ist es auch möglich, erfindungsgemäße Schichtstoffe durch Vereinigung der vorgefertigten Vlies- und Gelegeschichten auf Assembliermaschinen und anschließendes Vernadeln zu erzeugen.

Die Auswahl der für die Herstellung der erfindungsgemäßen filamentverstärkten Vliesstoffe eingesetzten Gelege erfolgt nach den oben angegebenen Kriterien.

Die Verfestigung des Schichtstoffes Vliesstoffes erfolgt durch Vernadeln der abgelegten Vlies- und Gelegeschichten mit der oben angegebenen Stichzahl. Gewünschtenfalls kann eine zusätzliche Verfestigung in an sich bekannter Weise vorgenommen werden durch Aufbringen, z.B. Aufsprühen von Bindemittel-Lösungen oder -Dispersionen oder aber vorzugsweise durch das Einbringen von Schmelzbindern und anschließende Wärmebehandlung bei einer Temperatur, bei der der Schmelzbinder schmilzt und die tragenden Filamente des Vliesstoffes an deren Kreuzungspunkten verbindet.
Der Schmelzbinder wird mit besonderem Vorteil in Form von Bindefilamenten in das Vlies eingebracht. Diese können als separate Filamente vorliegen, wenn sie z. B. aus separaten Öffnungen der Spinnbalken ausgesponnen und im ablaufenden Faservorhang gleichmäßig verteilt werden, oder sie können als Mantel oder Seite der tragenden Filamente oder eines Teils der tragenden Filamente vorliegen wenn entsprechende Düsenöffnungen für das Erspinnen von Kern-Mantel-Filamenten oder Seite-an-Seite Zweikomponentenfilamenten im Spinnbalken vorgesehen werden.

Sofern der Binder ein Schmelzbinder ist, wird der Schichtstoff nach dem Vernadeln und der Binderapplikation einer Wärmebehandlung unterworfen bei einer Temperatur, bei der der Schmelzbinder schmilzt.

Die erfindungsgemäßen Schichtstoffbahnen zeigen keine Delaminierungsneigung, und keine Bildung von Wellen und Rissen, selbst nicht unter hoher thermischmechanischer Belastung.
Die erfindungsgemäßen Schichtstoffbahnen zeigen beim Bituminieren einen überraschend geringen Breiteneinsprung, der bei einer etwa 1000 mm breiten Bahn nur 2 bis 4 mm beträgt, im Vergleich zu etwa 12 mm bei herkömmlichen Bahnen. Ferner zeigt sich, daß man mit dem erfindungsgemäßen Schichtstoff auch bei rauhen Bituminierungsbedingungen ebene, flächenstabile, blasenfreie Bitumenbahnen erhält. Weiterhin steigt die Durchstoßfestigkeit, wie sie sich in der Stempeldurchdrückprüfung nach DIN 54 307 äußert. Dadurch ergibt sich eine erheblich verbesserte Verarbeitbarkeit und eine erhöhte Arbeitssicherheit beim Verlegen der erfindungsgemäßen bituminierten Dachbahnen auf dem Dach.
Diese Vorteile der erfindungsgemäßen Verstärkungsbahn ergeben sich überraschenderweise durch das Vernadeln der Vliesschichten mit dem Gelege aus Verstärkungsgarn. Dabei zeigen auch erfindungsgemäße Schichtstoffe mit leichten Gelegen von 0,5 bis 1 Faden/cm bereits einen überraschend hohen Festigkeits- und Stabilitätsvorteil. Die Glasgelegeschicht wird durch die beiden Polyester-Spinnvliesschichten abgedeckt. Dies erweist sich beim Vernadeln des Schichtstoffes und bei der Bituminierung als sehr vorteilhaft.

Ein weiterer Gegenstand der vorliegenden Erfindung ist eine bituminierte Dachbahn und eine bituminierte Dachunterspannbahn, die als Träger eine erfindungsgemäße gelegeverstärkte Schichtstoffbahn enthält.

Diese bituminierten Dachbahnen oder Dachunterspannbahnen werden hergestellt durch Tränken und/oder Beschichten der erfindungsgemäßen Verstärkungsbahnen mit geschmolzenem Bitumen in an sich bekannter Weise.

Das folgende Ausführungsbeispiel veranschaulicht die Herstellung des erfindungsgemäßen Schichtstoffs und seine Verwendung zur Herstellung einer Bitumen-Dachbahn.

### Beispiel

An einer Spinnvliesanlage mit 3 hintereinander liegenden Doppelspinnbalken mit je 27 Spinndüsen zu je 92 Spinnöffnungen werden pro Spinndüse 200 g/min Polyethylenterphalat-Schmelze ausgesponnen. Jede Schar von 92 Fäden wird geteilt und in zwei Injektordüsen verstreckt, sodaß sich Filamente mit einem Einzeltiter von 4 dtex ergeben.
Der Fadenvorhang wird auf einem Ablageband bei einer Bandgeschwindigkeit von ca. 20 m/min wirr abgelegt.
Zwischen dem 2. und dem 3. Doppelspinnbalken läßt man ein Glasgelege RG 0,8/0,8, 34 PVA von 6,5 g/m² von einer gebremsten Ablaufvorrichtung zwischen die Spinnlagen einlaufen.
Die 2 Vlies-Schichten mit dem dazwischen eingebetteten Glasgelege werden durch einen Kalander schonend vorverfestigt und dann mit 40 Stichen/cm² mit Nadeln 15x18x38 3" und einer Einstichtiefe von 13 mm, schonend vernadelt.
Anschließend wird das Vlies, wie bei einer Standardware üblich, mit einer Acrylatbinder-Dispersion eingesprüht, auf einem Trommeltrockner ohne Verstreckung getrocknet und aufgewickelt.

Eine Bahn des so hergestellten Schichtstoffs von 1010 mm Breite wird in einer Tränkanlage bei einer Temperatur von 190 °C mit Oxydationsbitumen der Type 95/35 mit einer Durchlaufgeschwindigkeit von etwa 25 m/min imprägniert.
Nach Abkühlung der Bahn wird bei 170 °C über eine Schlitzdüse noch eine Deckmasse aus Polymerbitumen auf Basis SBS (Styrol/Butadien/Styrol-Copolymer) aufgetragen und die erhaltene Bitumenbahn über Kühlwalzen auf etwa Raumtemperatur gekühlt. Das Flächengewicht der fertigen Bahn beträgt 3000 g/m².

Die Breite der erhaltenen Bahn beträgt 1007 bis 1008 mm, d.h. daß beim Bituminieren ein Breiteneinsprung von nur 2-3 mm eingetreten ist. Bei herkömmlichen Bahnen tritt unter den gleichen Bituminierbedingungen ein Breiteneinsprung von etwa 12 mm ein. Außerdem ergibt sich bei Verwendung der erfindunggemäßen Bahn nach dem Tränken eine stabile, wellenfreie Bitumenbahn, und nach dem Deckmassen-Auftrag wird eine ebene, flächenstabile, blasenfreie Bitumenbahn erhalten, wärend gleiche Bituminierbedingungen bei herkömmlichen Bahnen nach dem Tränken labile ("flatterige") Bahnen liefern, die nach dem Deckmassen-Auftrag L-Wellen und Blasen aufweisen.

## Patentansprüche

1. Schichtstoff aus mindestens zwei Schichten von Spinnvliesen und mindestens einer Gelegeschicht aus Verstärkungsgarnen, dadurch gekennzeichnet, daß die Gelegeschichten bzw. die Gelegeschicht jeweils zwischen zwei Spinnvlies-Schichten liegen und das Gelege eine Fadendichte von 0,5 bis 3 Fäden/cm aufweist, und daß Spinnvliese und Gelege durch eine Nadelung von etwa 20 - 70 Stichen/cm² miteinander verbunden sind.

2. Schichtstoff gemäß Anspruch 1, dadurch gekennzeichnet, daß die Spinnvliese aus Polyesterfasern, insbesondere aus Polyethylen-terephthalat und die Verstärkungsfäden aus Glas oder anderen thermisch stabilen Rohstoffen bestehen.

3. Schichtstoff nach mindestens einem der Ansprüche 1 und 2, dadurch gekennzeichnet, daß der Schichtstoff zusätzlich noch durch einen chemischen Binder, vorzugsweise durch einen flammhemmenden Binder, verfestigt ist.

4. Verfahren zur Herstellung des Schichtstoffs des Anspruchs 1, dadurch gekennzeichnet, daß eine erste Spinnvliesschicht ersponnen wird, dann das welches aufgebracht wird, anschließend die zweite Spinnvliesschicht auf diese Kombination aufgesponnen wird und dieser Schichtstoff abschließend mit etwa 20 - 70 Stichen/cm² vernadelt wird.

5. Verwendung eines Schichtstoffes des Anspruchs 1 zur Herstellung von Dachbahnen und von Dachunterspannbahnen.

## Claims

1. A laminate formed from at least two layers of spunbonded web and at least one laid layer of reinforcing yarn, wherein the laid layer or layers are each disposed between two layers of spunbonded and have a thread count of 0.5 to 3 threads/cm, and the spunbonded and laid layers are joined together by needling at 20-70 stitches/cm².

2. The laminate of claim 1, wherein the spunbonded webs are made of polyester fiber, in particular polyethylene terephthalate, and the reinforcing yarns are made of glass or other thermally stable raw materials.

3. The laminate of at least one of claims 1 and 2, additionally consolidated with a chemical binder, preferably with a flame retardant binder.

4. A process for manufacturing the laminate of claim 1, which comprises spinning a first layer of spunbonded, then applying the laid structure which has a thread count of 0.5 to 3 threads/cm, then spinning onto this combination the second layer of spunbonded, and finally needling this layered product at 20-70 stitches/cm².

5. The use of a laminate of claim 1 for manufacturing roofing and rooflining membranes.

## Revendications

1. Stratifié constitué d'au moins deux couches de nappes de fibres et d'au moins une couche de grille en fils de renforcement, caractérisé en ce que chacune des couches de grille, ou encore la couche de grille, est disposée entre deux couches de nappes de fibres, et la grille a un compte de fils de 0,5 à 3 fils/cm, et que les nappes de fibres et les grilles sont assemblées les unes aux autres par un aiguilletage de 20 à 70 points/cm².

2. Stratifié selon la revendication 1, caractérisé en ce que les nappes de fibres sont constituées de fibres de polyester, en particulier de poly(téréphtalate d'éthylène), et les fils de renforcement sont en verre ou en d'autres matières premières thermiquement stables.

3. Stratifié selon au moins l'une des revendications 1 et 2, caractérisé en ce que le stratifié est en outre consolidé par un liant chimique, de préférence un liant retardateur de flamme.

4. Procédé de fabrication du stratifié selon la revendication 1, caractérisé en ce qu'on file la première nappe de fibres, puis on applique la grille, qui comporte un compte de fils de 0,5 à 3 fils/cm, puis on applique par filage, sur cette combinaison, une deuxième couche de nappe de fibres, et ce stratifié est ensuite aiguilleté à raison de 20 à 70 points/cm².

5. Utilisation d'un stratifié selon la revendication 1 pour fabriquer des bandes de toit et des bandes pour la face inférieure de toits.
